(19) Europäisches Patentamt
European Patent Office
Office européen des brevets

(11) **EP 1 431 542 B1**

(12) **EUROPÄISCHE PATENTSCHRIFT**

(45) Veröffentlichungstag und Bekanntmachung des Hinweises auf die Patenterteilung:
**20.02.2008 Patentblatt 2008/08**

(51) Int Cl.:
***F02B 37/04*** *(2006.01)*

(21) Anmeldenummer: 02102846.9

(22) Anmeldetag: **20.12.2002**

(54) **Verfahren zum Betrieb des Bordnetzes eines Kraftfahrzeuges mit elektrisch unterstuetztem Turbokompressor**

Method of operation of a vehicle electrical system with electrically assisted turbocompressor

Procédé de fonctionnement d'un réseau électrique d'un véhicule avec un turbocompresseur à assistance électrique

(84) Benannte Vertragsstaaten:
**DE FR GB**

(43) Veröffentlichungstag der Anmeldung:
**23.06.2004 Patentblatt 2004/26**

(73) Patentinhaber: **Ford Global Technologies, LLC Dearborn, MI 48126 (US)**

(72) Erfinder:
• **Eifert, Mark**
**52070, Aachen (DE)**

• **Ploumen, Serve**
**6281, AS Mechelen (NL)**

(74) Vertreter: **Drömer, Hans-Carsten et al**
**Ford-Werke Aktiengesellschaft,**
**Patentabteilung NH/DRP,**
**Henry-Ford-Strasse 1**
**50725 Köln (DE)**

(56) Entgegenhaltungen:
**EP-A- 0 709 559       EP-A- 0 791 735**
**DE-A- 3 618 449       GB-A- 1 396 082**
**US-A- 4 757 686       US-A- 5 906 098**

**Beschreibung**

Die Erfindung betrifft ein Verfahren zum Betrieb des elektrischen Bordnetzes eines Kraftfahrzeuges, dessen Brennkraftmaschine mit einem elektrisch unterstützten Turbokompressor und mit einer Lichtmaschine gekoppelt ist, denen ein Regler zur festlegung von Betriebspunkten zugeordnet ist. Ferner betrifft die Erfindung ein Kraftfahrzeug, das zur Durchführung des Verfahrens ausgebildet ist.

Bei der allgemein angestrebten Reduzierung der Abgasemissionen von Kraftfahrzeugen spielt die Optimierung der Stromerzeugung für das elektrische Bordnetz des Kraftfahrzeuges eine erhebliche Rolle. Dies gilt insbesondere für zukünftige Kraftfahrzeuge, bei denen aufgrund des zunehmenden Einsatzes elektrischer und elektronischer Komponenten eine hohe elektrische Leistungen erzeugt werden müssen. Eine in vielen Kraftfahrzeugen vorhandene Komponente mit hohem Stromverbrauch stellt ein sog. elektrisch unterstützter Turbokompressor bzw. Turbolader oder EATC (Electrically Assisted Turbo Compressor) dar. Der im Ansaugkrümmer angeordnete Kompressor eines EATC wird primär von einer Turbine im Abgasweg der Brennkraftmaschine angetrieben; der Kompressor kann jedoch bei Bedarf auch zusätzlich durch einen integrierten Elektromotor auf eine gewünschte Drehzahl gebracht werden.

Die EP 0 709 559 A1 beschreibt eine Brennkraftmaschine, der ein elektrisch unterstützter Turbolader und ein Generator zugeordnet sind. Anhand einer Drehzahl der Brennkraftmaschine und einer Gaspedalstellung wird ein Zielladedruck für den Turbolader bestimmt, anhand dessen ein Betriebszustand des Turboladers als Generator in einen Betriebszustand als Lader geändert wird, wenn ein Beschleunigungsvorgang gewünscht ist. Weiterhin ist vorgesehen, dass mit der Änderung des Betriebszustands des Turboladers eine diametrale Betriebszustandsänderung des Generators aus einem Unterstützungsmodus für die Brennkraftmaschine in einen Stromerzeugungsmodus stattfindet, um die vom Turbolader zur Beschleunigung der Brennkraftmaschine benötigte elektrische Energie bereitstellen zu können.

Aus der GB 1 396 082 ist ein mit einem Hilfsantrieb versehener Turbolader bekannt, wobei der Hilfsantrieb die Aufgabe hat, die Drehzahl des Turboladers über einen gesamten Drehzahlbereich einer Brennkraftmaschine konstant zu halten. Eine Regelung für den Hilfsantrieb ist derart ausgebildet, dass ein Stromverbrauch des Hilfsantriebs auch unter kontinuierlichen Betriebsbedingungen kompensiert wird

Die EP 0 791 735 A1 beschreibt eine Brennkraftmaschine mit einem elektrisch unterstützten Turbolader und einer an die Brennkraftmaschine angekoppelte Lichtmaschine. Der Turbolader und die Lichtmaschine werden so angesteuert, dass immer ein Austausch elektrischer Leistung zwischen den beiden Komponenten stattfindet. Entweder wird der Turbolader bei hoher Last und hoher Drehzahl der Brennkraftmaschine als Generator betrieben und die Lichtmaschine wirkt als Motor, oder die Lichtmaschine wirkt als Generator und stellt dem Turbolader elektrische Energie zur Verfügung

Vor diesem Hintergrund war es Aufgabe der vorliegenden Erfindung, für Kraftfahrzeuge mit einem elektrisch unterstützten Turbokompressor einen effizienteren Betrieb des Bordnetzes zu ermöglichen.

Diese Aufgabe wird durch ein Verfahren mit den Merkmalen des Anspruchs 1 und durch ein Kraftfahrzeug mit den Merkmalen des Anspruchs 3 gelöst.

Vorteilhafte Ausgestaltungen der Erfindung sind in dem abhängigen Anspruch enthalten.

Das erfindungsgemäße Verfahren dient dem Betrieb des elektrischen Bordnetzes eines Kraftfahrzeuges, dessen Brennkraftmaschine einen elektrisch unterstützten Turbokompressor und einen integrierten Starter-Generator oder eine Lichtmaschine enthält, die in allen Kombinationen ihrer Betriebsweisen des Motorbetriebs und des Generatorbetriebs eingesetzt werden können und denen ein Regler zur Beeinflussung von Betriebspunkten des elektrisch unterstützten Turbokompressors und des integrierten Starter-Generators oder der Lichtmaschine zugeordnet ist, wobei der Regler die Betriebspunkte des integrierten Starter-Generators oder der Lichtmaschine und des elektrisch unterstützten Turbokompressors derart festlegt, dass der gesamte elektrische und mechanische Leistungsverlust des Kraftfahrzeugs reduziert wird.

Gemäß dem vorgeschlagenen Verfahren wird der vorhandene elektrisch unterstützte Turbokompressor (EATC) nicht nur in der Funktion als Elektromotor, welcher elektrische Energie in mechanische umwandelt, sondern bedarfsweise auch umgekehrt als Generator eingesetzt, der mechanische Energie in elektrische umwandelt. Hierdurch wird im Kraftfahrzeug eine zusätzliche Stromquelle bereitgestellt, mit deren Hilfe die Effizienz der Stromerzeugung für das Bordnetz erhöht und damit letztendlich die Kraftstoffausnutzung verbessert werden kann.

Die Lichtmaschine oder der integrierte Starter-Generator (ISG) und der elektrisch unterstützte Turbokompressor werden derart betrieben , dass der gesamte elektrische und mechanische Leistungsverlust des Kraftfahrzeuges reduziert wird. Insbesondere kann versucht werden, den genannten Leistungsverlust zu jedem Zeitpunkt mit den gegebenen Möglichkeiten zu minimieren. Der Leistungsverlust stellt somit ein Optimierungskriterium dar, anhand dessen sich die Betriebspunkte von Lichtmaschine oder ISG und EATC festlegen lassen.

Als stromerzeugende Lichtmaschine enthält das Kraftfahrzeug einen sogenannten integrierten Starter-Generator (ISG), welcher wahlweise als Starter zum Anlassen der Brennkraftmaschine, als zusätzlicher Antrieb zur Unterstützung der Brennkraftmaschine oder als Generator (Lichtmaschine) betrieben werden kann. Das Verfahren nutzt alle möglichen Kombinationen der Betriebsweisen (als Motor beziehungsweise als Generator) von ISG und EATC aus. Das heisst, ISG und EATC können gleichzeitig als Motor beziehungsweise gleichzeitig als Generator oder aber auch verschieden voneinander - der eine als Motor und der andere als Generator - betrieben werden.

Diesbezüglich kann der gesamte Leistungsverlust des Kraftfahrzeuges vorzugsweise unter Berücksichtigung der von der Brennkraftmaschine geforderten Leistung, des Beriebszustandes (U, I, T, SOC, SOH, SOF) eines wiederaufladbaren Energiespeichersystems (ESS) des Bordnetzes (soweit vorhanden), der Belastung des Bordnetzes durch Verbraucher sowie der Charakteristiken von Lichtmaschine und EATC im aktuellen Arbeitspunkt bestimmt werden. Energiespeichersysteme können dabei z. B. Batterien, Ultrakapazitoren oder Ähnliches oder Kombinationen sein wobei sich der Betriebszustand z. B. aus der Klemmenspannung (U), dem Klemmenstrom (I), der Betriebstemperatur (T), dem Ladegrad (SOC, "State of Charge"), dem Alterungsgrad (SOH, "State of Health") und dem Funktionerfüllungsgrad (SOF; "State of Function") ergeben kann. Die aufgezählten Größen und Zustände können gemessen oder berechnet werden, so dass der gesamte Leistungsverlust aus ihnen unter Zuhilfenahme empirisch oder theoretisch gewonnener Zusammenhänge bestimmt werden kann. Die Ausnutzung dieser Zusammenhänge erlaubt es, den Betrieb der Lichtmaschine und des EATC so festzulegen, dass der Leistungsverlust minimiert wird.

Die Erfindung betrifft ferner ein Kraftfahrzeug mit einem elektrisch unterstützten Turbokompressor EATC der vorstehend genannten Ausgestaltung sowie mit einer Lichtmaschine oder eimem integrierten Starter-Generator und einem mit dem EATC gekoppelten Regler, wobei das Kraftfahrzeug, die Lichtmaschine oder der integrierte Starter-Generator und der Regler dahingehend ausgebildet sind, ein Verfahren der oben erläuterten Art durchzuführen. Der Regler ist also dahingehend ausgebildet, den Einsatz der Lichtmaschine oder des ISG und des EATC so zu koordinieren, dass der gesamte Leistungsverlust des Kraftfahrzeuges reduziert bzw. im Idealfalle minimiert wird.

Der Regler erhält Eingangssignale, die die vom Fahrer angeforderte Leistung der Brennkraftmaschine, den Betriebszustand eines Energiespeichersystems des Bordnetzes sowie den Fahrzeugzustand (Geschwindigkeit, Beschleunigung etc.) beschreiben. Der Regler kann dann unter Verwendung der genannten Grössen den Leistungsverlust des Kraftfahrzeuges berechnen und Betriebspunkte für die Lichtmaschine oder dem ISG und den EATC festlegen, bei denen der Leistungsverlust minimal wird.

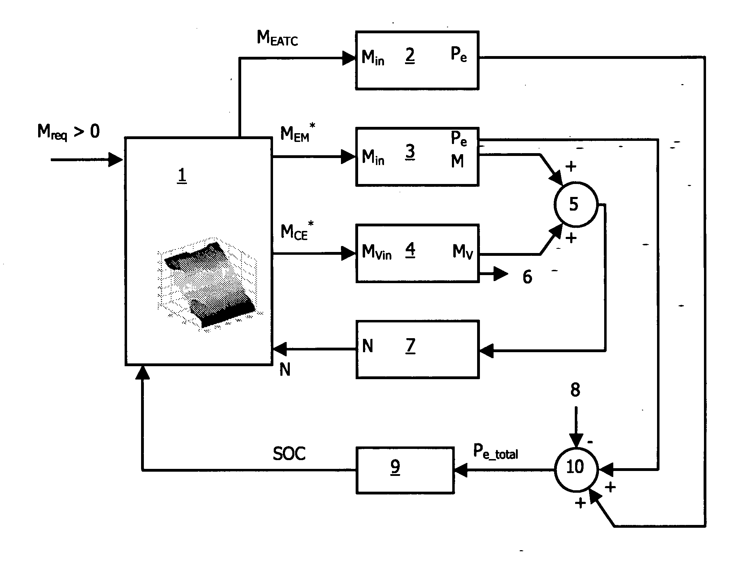

Im Folgenden wird die Erfindung mit Hilfe der beigefügten Figur beispielhaft erläutert.

Die einzige Figur zeigt schematisch die Komponenten eines Kraftfahrzeuges, die bei der Durchführung des erfindungsgemäßen Verfahrens zum Betrieb des Bordnetzes eines Kraftfahrzeuges eine Rolle spielen.

In der Abbildung sind die für die vorliegende Erfindung wesentlichen Komponenten eines Kraftfahrzeuges als Systemblöcke sowie die zwischen diesen stattfindenden Signal- und Energieflüsse dargestellt. In einer ersten Schleife steuert ein Regler 1 eine Brennkraftmaschine 4 an, so daß diese ein Drehmoment $M_v$ an eine Kurbelwelle 5 abgibt. Der Betrieb der Brennkraftmaschine 4 hat dabei einen Kraftstoffverbrauch 6 zur Folge. Die Kurbelwelle 5 wirkt auf den Bewegungszustand des Fahrzeuges 7 ein (Geschwindigkeit, Beschleunigung). Die Drehzahl N der Kurbelwelle wird gemessen und dem Regler 1 zur Verfügung gestellt. Als externe Vorgabe kann der Regler das Signal eines gewünschten Drehmomentes $M_{req}$ erhalten, das z.B. vom Fahrer durch Betätigen des Gaspedals bereitgestellt wird.

Der Regler 1 steuert des Weiteren in einer zweiten Schleife eine Lichtmaschine oder einen integrierten Starter-Generator ISG 3, welcher mechanisch mit der Kurbelwelle 5 gekoppelt ist. Bei einem Betrieb als Starter entnimmt der ISG 3 dabei dem elektrischen Bordnetz 10 eine elektrische Leistung $P_e$ und wandelt diese in ein mechanisches Drehmoment M an der Kurbelwelle 5 um. Bei einem Betrieb als Generator entnimmt die Lichtmaschine oder der ISG 3 in umgekehrter Weise der Kurbelwelle 5 mechanische Energie, welche in elektrische Leistung $P_e$ umgewandelt und in das Bordnetz 10 eingespeist wird.

Dem Bordnetz 10 wird ferner elektrische Leistung von diversen elektrischen Verbrauchern 8 des Kraftfahrzeuges entnommen. Das Bordnetz 10 steht darüber hinaus in einem Energieaustausch mit einem Akkumulatorsystem 9, wobei überschüssige Leistung $P_{e\_total}$ aus dem Bordnetz in dem Akkumulatorsystem gespeichert werden kann oder umgekehrt elektrische Leistung von dem Akkumulatorsystem zur Unterstützung einer hohen Leistungsanforderung des Bordnetzes 10 bereitgestellt werden kann. Der Betriebszustand des Akkumulatorsystems wird dem Regler 1 mitgeteilt.

Das bis hierher beschriebene System stellt im Wesentlichen eine bekannte Anordnung zum Betrieb einer Brennkraftmaschine und eines zugehörigen elektrischen Bordnetzes dar. Dieses System wird erfindungsgemäß durch einen elektrisch unterstützten Turbokompressor 2 (EATC) erweitert. Ein Turbokompressor dient in bekannter Weise der Erhöhung des Luftladedruckes der Brennkraftmaschine 4. Der Antrieb des Turbokompressors erfolgt primär über aus der Brennkraftmaschine ausströmende Abgase ("Abgas-Turbokompressor"). Bei einem EATC ist darüber hinaus ein Elektromotor mit dem Kompressor gekoppelt, um bei Bedarf unter Einsatz elektrischer Energie eine zusätzliche Kompressionsleistung zu erzeugen (z. B. um die konventionellen Turbokompressoren innewohnende verzögerte Reaktion auf plötzliche Drehmomentanforderungen zu eliminieren).

Der unterstützende Elektromotor des EATC wird nun in umgekehrter Weise als Generator eingesetzt, um mechanische Energie in elektrische umzuwandeln. Die mechanische Energie kann dabei z. B. aus dem die Brennkraftmaschine verlassenden Abgas entnommen werden, welches über die Turbine des Turboladers geleitet wird. Der EATC kann dann bei Bedarf eine elektrische Leistung $P_e$ an das Bordnetz 10 bereitstellen.

In dem beschriebenen Kraftfahrzeug stehen somit zwei verschiedene Stromquellen zur Erzeugung elektrischer Energie für das Bordnetz 10 zur Verfügung, nämlich die Lichtmaschine oder der ISG 3 und der EATC 2. Der Regler 1 kann daher diese beiden Energiequellen koordiniert einsetzen, um die Erzeugung elektrischer Leistung zu optimieren. Der Regler 1 kann insbesondere basierend auf der Leistungsanforderung $M_{req}$ des Fahrers, dem Akkumulatorsystemzustand SOC, der Belastung 8 des Bordnetzes 10 sowie den Effizienzcharakteristiken des EATC 2, oder Lichtmaschine oder des ISG 3 und der Brennkraftmaschine 4 den gesamten Leistungsverlust für die Erzeugung mechanischer und elektrischer Energie minimieren, indem die Betriebspunkte von EATC 2 und Lichtmaschine oder ISG 3 entsprechend gesetzt werden. Der gesamte Leistungsverlust $P_{total}$ setzt sich additiv wie folgt aus den Leistungsverlusten der Lichtmaschine 3, des EATC 2, des Energiespeichersystems 9 sowie der Brennkraftmaschine 4 zusammen:

$$P_{total} = P_{Lichtmaschine} + P_{EATC} + P_{ESS} + P_{Brennkraftmaschine}$$

Die Optimierung kann in verschiedenen Modi angewendet werden (wobei das Motorbremsmoment und die in das Energiespeichersystem überführte Leistung variiert wird):

A. ISG 3 (oder Lichtmaschine) erzeugt elektrische Leistung, EATC 2 arbeitet zur Ladedruckerhöhung der Brennkraftmaschine 4;

B. ISG 3 (oder Lichtmaschine) erzeugt elektrische Leistung, EATC 2 erzeugt **elektrische Leistung;**

C. ISG 3 arbeitet als Starter oder zusätzlicher Fahrzeugantrieb, EATC 2 arbeitet zur Ladedruckerhöhung der Brennkraftmaschine 4;

D. ISG 3 arbeitet als Fahrzeugantrieb, EATC 2 erzeugt elektrische Leistung.

Weitere Modi sind im Rahmen der beigefügten Ansprüche durchaus denkbar, hier aber nicht aufgeführt.
Auch ist es denkbar, die in einem beschleunigten Turbolader gespeicherte mechanische Energie durch Umschaltung in den Generatorbetrieb zur Energieerzeugung zu nutzen, falls der Turbolader nicht mehr benötigt wird, z. B. bei plötzlichem Übergang in den Schubbetrieb.

**Patentansprüche**

1. Verfahren zum Betrieb des elektrischen Bordnetzes (10) eines Kraftfahrzeuges, dessen Brennkraftmaschine (4) einen elektrisch unterstützten Turbokompressor (2) und einen integrierten Starter-Generator (3) oder eine Lichtmaschine enthält, die in allen Kombinationen ihrer Betriebsweisen des Motorbetriebs und des Generatorbetriebs eingesetzt werden können und denen ein Regler (1) zur Beeinflussung von Betriebspunkten des elektrisch unterstützen Turbokompressors (2) und des integrierten Starter-Generators (3) oder der Lichtmaschine zugeordnet ist,
**dadurch gekennzeichnet, daß**
der Regler (1) die Betriebspunkte der Lichtmaschine oder des integrierten Starter-Generators (3) und des elektrisch unterstützte Turbokompressor (2) derart festlegt, daß der gesamte elektrische und mechanische Leistungsverlust des Kraftfahrzeugs minimiert wird und wobei zur Bestimmung des Leistungsverlustes die Leistungsanforderungen, vorzugsweise Drehmoment Mreq an die Brennkraftmaschine, der Betriebszustand, vorzugsweise Klemmenspannung U, Klemmenstrom I, Betriebstemperatur T, Ladegrad SOC, Alterungsgrad SOH, Funktionserfüllungsgrad SOF, eines Energiespeichersystems (9) des Bordnetzes, die Belastung (8) des Bordnetzes sowie die Charakteristiken von Lichtmaschine oder integriertem Starter-Generator (3) und elektrisch unterstütztem Turbokompressor (2) berücksichtigt werden.

2. Verfahren nach Anspruch 1,
**dadurch gekennzeichnet, daß**
der gesamte Leistungsverlust zu jedem Zeitpunkt minimiert wird.

3. Kraftfahrzeug,
**dadurch gekennzeichnet, daß**
dieses eine Lichtmaschine oder einen integrierten Starter-Generator (3) und einen elektrisch unterstützen Turbokompressor (2) aufweist, die mit einem Regler (1) gekoppelt sind, der zur Durchführung des Verfahrens nach einem der Ansprüche 1 bis 2 eingerichtet ist.

**Claims**

1. Method for operating the on-board electrical system (10) of a motor vehicle whose internal combustion engine (4) contains an electrically assisted turbo compressor (2) and an integrated starter/generator (3) or a dynamo which can be used in all combinations of their methods of operation of the engine mode and of the generator mode and which are assigned a controller (1) for influencing operating points of the electrically assisted turbo compressor (2) and of the integrated starter/generator (3) or of the dynamo, **characterized in that** the controller (1) defines the operating points of the dynamo or of the integrated starter/generator (3) and of the electrically assisted turbo compressor (2) in such a way that the entire electrical and mechanical power loss of the motor vehicle is minimized, and wherein the power requirements, preferably the torque Mreq, which are made of the internal combustion engine, the operating state, preferably terminal voltage U, terminal current I, operating temperature T, degree of charging SOC, degree of aging SOH, degree of functional fulfilment SOF, of an energy storage system (9) of the on-board vehicle electrical system, the loading (8) of the on-board vehicle electrical system and the characteristics of the dynamo or integrated starter/generator (3) and electrically assisted turbo compressor (2) are taken into account for the determination of the power loss.

2. Method according to Claim 1, **characterized in that** the entire power loss at any time is minimized.

3. Motor vehicle, **characterized in that** the said motor vehicle has a dynamo or an integrated starter/generator (3) and an electrically assisted turbo compressor (2), which are coupled to a controller (1) which is configured to carry out the method according to one of Claims 1 to 2.

**Revendications**

1. Procédé de fonctionnement du réseau de bord électrique (10) d'un véhicule automobile dont le moteur à combustion interne (4) contient un turbocompresseur (2) à assistance électrique et un démarreur-générateur intégré (3) ou un alternateur qui peuvent être utilisés dans toutes leurs combinaisons de leurs modes de fonctionnement en tant que moteur et en tant que générateur et auxquels est associé un régulateur (1) pour influencer les points de fonctionnement du turbocompresseur (2) à assistance électrique et du démarreur-générateur intégré (3) ou de l'alternateur, **caractérisé en ce que** le régulateur (1) détermine les points de fonctionnement de l'alternateur ou du démarreur-générateur intégré (3) et du turbocompresseur (2) à assistance électrique de telle sorte que le total des pertes de puissance électrique et mécanique du véhicule automobile soit réduit et la détermination des pertes de puissance tenant compte des demandes de puissance, de préférence le couple Mreg au niveau du moteur à combustion interne, de l'état de fonctionnement, de préférence la tension des bornes U, le courant aux bornes I, la température de fonctionnement T, le niveau de charge SCO, le degré de vieillissement SOH, le niveau d'accomplissement de la fonction SOF, d'un système d'accumulation d'énergie (9) du réseau de bord, de la charge (8) du réseau de bord ainsi que des caractéristiques de l'alternateur ou du démarreur-générateur intégré (3) et du turbocompresseur (2) à assistance électrique.

2. Procédé selon la revendication 1, **caractérisé en ce que** les pertes de puissance totales sont réduites à tout moment.

3. Véhicule automobile, **caractérisé en ce que** celui-ci présente un alternateur ou un démarreur-générateur intégré (3) et un turbocompresseur (2) à assistance électrique qui sont connectés à un régulateur (1) qui est conçu pour mettre en oeuvre le procédé selon l'une des revendications 1 à 2.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0709559 A1
- GB 1396082 A
- EP 0791735 A1